# EUROPÄISCHE PATENTSCHRIFT

(11) **EP 2 346 642 B1**
(45) Veröffentlichungstag und Bekanntmachung des Hinweises auf die Patenterteilung: **05.12.2012**
(21) Anmeldenummer: 09748031.3
(22) Anmeldetag: 23.10.2009
(51) Int. Cl.: B23P 11/02

(54) **MIT TEMPERATURFÜHLER AUSGERÜSTETES KÜHLGERÄT FÜR SCHRUMPFFUTTER**
COOLING DEVICE EQUIPPED WITH TEMPERATURE SENSOR FOR SHRINK FIT CHUCK
APPAREIL DE REFROIDISSEMENT POUR UN MANDRIN DE FRETTAGE, ÉQUIPÉ D'UN CAPTEUR THERMIQUE

(30) Priorität: 25.10.2008 DE 102008053245
(43) Veröffentlichungstag der Anmeldung: 27.07.2011
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Misselhorn, Hein-Martin
(86) Internationale Anmeldenummer: PCT/EP2009/007610
(87) Internationale Veröffentlichungsnummer: WO 2010/046126

(56) Entgegenhaltungen:
- DE-A1-102006 029 144
- DE-B3-102004 042 898
- DE-U1-202007 000 869
- DE-U1-202007 007 837

## Beschreibung

Die Erfindung betrifft ein Spezialkühlgerät zum Wiederabkühlen von Werkzeughaltern in die durch Erhitzen ein Werkzeug ein- oder ausgeschrumpft wurde und die so ausgestaltet sind, wie vom Oberbegriff des Anspruchs 1 angegeben.

Das Ein- und Ausschrumpfen von Werkzeugen, die mit ihrem Schaft einen Pressverbund mit einer Hülsenpartie eines Werkzeughalters eingehen, ist seit geraumer Zeit Stand der Technik. Wie ein solches Ein- und Ausschrumpfen im Einzelnen vor sich geht und welche Effekte dabei auftreten, ist im Detail im Patent EP 1 353 768 B1 der heutigen Anmelderin beschrieben, vgl. insbesondere die Absätze [0001] bis [0017] jenes Patents, die durch Verweisung zum Gegenstand der hiesigen Beschreibung gemacht werden.

Im Anschluss an das ein Ein- oder Ausschrumpfen eines Werkzeugs ermöglichende Erhitzen wird die Hülsenpartie des Werkzeughalters eine Temperatur von etwa 200 °C bis 500 °C haben. Um keine unnötige Zeit zu verlieren ist es wichtig, die Hülsenpartie möglichst schnell wieder auf eine Temperatur herunterzukühlen, bei der sie gefahrlos angefasst werden kann, um den frisch bestückten Werkzeughalter an den Maschinenbediener weitergeben zu können oder den nunmehr leeren Werkzeughalter ablegen zu können.

Es ist bereits bekannt die Hülsenpartie zu diesem Zweck mit Kühlmittel zu beaufschlagen, etwa mit Pressluft anzublasen oder mit flüssigem Kühlmittel zu duschen. Solche Lösungen sind schon wegen des letztendlich nicht hundertprozentig kontrollierbaren offenen Kühlmittelkreislaufs bzw. den durch das Blasen mit Pressluft verursachten Lärm unpraktisch.

Indes ist bereits auch eine Lösung mit geschlossenem Kühlmittelkreislauf bekannt - insofern ist auf das vorveröffentlichte Gebrauchsmuster DE 20 2007 007 837 der heutigen Anmelderin zu verweisen.

Allen bekannten Lösungen ist gemeinsam, dass der Kühlvorgang nicht mit besonderer Präzision erfolgt, sondern entweder "großzügig" solange gekühlt wird, bis der Werkzeughalter auf jeden Fall wieder kalt ist, oder nach Gefühl solange, bis der Maschinenbediener glaubt, dass der Werkzeughalter sicherlich schon wieder so weit abgekühlt ist, dass er ihn gefahrlos anfassen kann - wozu in der Praxis entgegen der einschlägigen Vorschriften nicht immer ein Handschuh angezogen wird.

Erstenfalls ist der Abkühlvorgang unnötig zeitraubend, zumal er bei reiner Zeitsteuerung im Regelfall zeitlich so bemessen sein muss, dass auch der größte mit der Vorrichtung kühlbare Werkzeughalter wirklich kalt ist, wenn das Gerät den Abkühlvorgang beendet. Gerade bei der Behandlung von kleineren, wegen ihrer geringen Masse viel schneller wieder abkühlenden Werkzeughaltern verstreicht dann unnötig viel Zeit, bis der Abkühlvorgang beendet ist. Zudem wird unnötig Kühlmittel verbraucht.

Liegt es im Ermessen des Maschinenbedieners über die Dauer des Abkühlvorgangs zu entscheiden, dann besteht eine nicht unerhebliche Unfallgefahr. Denn es besteht stets das Risiko, dass der Maschinenbediener die Abkühlgeschwindigkeit zu optimistisch beurteilt, und den Werkzeughalter viel zu früh wieder in die Hand nimmt. Hier kann es unter ungünstigen Umständen sogar durchaus so sein, dass die Oberfläche der ursprünglich heißen Partie des Werkzeughalters auf Grund der intensiven Kühlung vielleicht zunächst wirklich angenehm kühl ist, sich aber plötzlich, zu einem Zeitpunkt, zu dem der Maschinenbediener den Werkzeughalter schon in die Hand genommen hat, wieder unangenehm erhitzt. Dies, weil die tieferliegenden Schichten des Werkzeughalters doch noch erhebliche Wärmeenergie gespeichert haben, die sich erst mit etwas Verzögerung wieder an der zunächst noch gut gekühlten Oberfläche bemerkbar macht. Der Maschinenbediener verbrennt sich dann oder muss den Werkzeughalter zumindest schneller wieder aus der Hand legen, als erwartet. Auch das kann zu Unfällen bzw. Beschädigungen des Werkzeughalters führen.

*Um die Kühlung zu optimieren, schlägt die* DE 10 2004 042 898 B3, die dem nächstliegenden Stand der Technik entspricht, *vor, die dort* zum *Abkühlen verwendeten Kühladapter mit* einem *Temperatursensor* zu *versehen, der Rückschlüsse auf die momentane Temperatur des Werkzeughalters zulässt. Eine ähnliche Lösung schlägt das Dokument* DE 10 2006 029 144 Al vor.

*Die bekannten Vorrichtungen zeichnen sich dadurch aus, dass sie die Temperatur nur mittelbar messen, in einem Bereich des Kühlkörpers, der dem Werkzeughalter benachbart liegt, soweit die Oberfläche des zu messenden Werkzeughalters unmittelbar angetastet wird, liegt der Temperatursensor vollständig außerhalb des Kühlkörpers, was nachteilig ist.*

Es ist daher die Aufgabe der Erfindung die bekannten Kühlanordnungen bzw. Kühlgeräte dahingehend zu verbessern, dass die für das sichere Kühlen benötigten Zeiten auf vereinfachter Art und Weise im Wesentlichen so kurz wie möglich gehalten werden, wobei gleichzeitig die Unfallgefahr weiter herabgesetzt wird.

Diese Aufgabe wird durch die Merkmale des Anspruchs 1 gelöst.

Die erfindungsgemäße Lösung zeichnet sich insbesondere dadurch aus, dass das Kühlgerät mindestens einen Temperaturfühler umfasst, der bei regulärem Betrieb des Kühlgeräts ein von der momentanen Temperatur der zu kühlenden Hülsenpartie abhängiges Signal liefert, welches auf die Betriebsdauer des Kühlgeräts am Werkzeughalter Einfluss nimmt und/oder auf den Betrieb der Schrumpfvorrichtung insgesamt.

Im Regelfall (bevorzugt) ist es so, dass das Signal des Temperaturfühlers zur Bestimmung des Zeitpunkts dient, zu dem der mittels des Kühlgeräts bewerkstelligte Kühlvorgang des Werkzeughalters so weit abgeschlossen ist, dass das Kühlgerät gefahrlos von dem zu kühlenden Werkzeughalter abgenommen werden kann, weil dieses wieder ohne die Gefahr der Verbrennung berührt werden kann. Als Maß, ob dies der Fall ist, kann eine bestimmte Grenztemperatur herangezogen werden - sobald der Temperaturfühler feststellt, dass der Werkzeughalter bzw. dessen zu kühlende Hülsenpartie die Grenztemperatur unterschreitet, wird ein Signal gegeben, das den Abkühlvorgang beendet bzw. den Maschinenbediener den Abkühlvorgang beenden lässt.

Es ist allerdings nicht zwingend, einzig und allein auf die Unterschreitung einer Grenztemperatur abzustellen. Es kann stattdessen im Einzelfall durchaus sinnvoll sein, die vom Temperaturfühler festgestellte Abkühlgeschwindigkeit mit zu berücksichtigen und in Relation zur Größe des aktuell zu kühlenden Werkzeughalters zu setzen - beispielsweise um bei hohen Kühlleistungen sicherzustellen, dass der Temperaturgradient innerhalb der abzukühlenden Hülsenpartie nicht zeitweilig so steil ist, dass die bereits abgekühlte Oberfläche der Hülsenpartie unversehens wieder heiß wird, sobald der Maschinenbediener die Kühlung beendet und den Werkzeughalter anfasst.

Alternativ oder zusätzlich kann das Signal des Temperaturfühlers auch dazu herangezogen werden, um beispielsweise die Kühlleistung zu beeinflussen, etwa durch Einflussnahme auf das den Kühlmittelstrom bestimmende Ventil des Kühlgeräts. Hierdurch wird natürlich ebenfalls Einfluss auf die im Einzelfall notwendige Betriebsdauer des Kühlgeräts (bzw. der Schrumpfvorrichtung) als Ganzes genommen. Auf diese Art und Weise lässt sich gerade dort, wo es um das Ein- und Ausschrumpfen großkalibriger Werkzeuge aus entsprechend groß dimensionierten Werkzeughaltern geht, eine erhebliche Zeiteinsparung erreichen, ohne dass ein übermäßiger Kühlmitteleinsatz erforderlich wäre.

Der Temperaturfühler *misst* die Temperatur der Oberfläche der zu kühlenden Hülsenpartie unmittelbar, d. h. indem er die besagte Oberfläche direkt abtastet, ggf. auch berührungslos. Das hat gegenüber jeder nur mittelbaren Messung bzw. "Temperaturbestimmung" (z. B. der Temperatur des Wärmeleitelements) den entscheidenden Vorteil, dass die Messung wesentlich genauer und vor allem schneller ist - gerade wenn man z. B. die Temperatur der Hülsenpartie nur mittelbar bestimmt, indem man die Temperatur des Wärmeleitelements "abtastet", um daraus auf die Oberflächentemperatur der Hülsenpartie rückzuschließen, kann man jede Änderung der Temperatur an der Oberfläche der Hülsenpartie nur mit erheblicher zeitlicher Verzögerung feststellen, was die Brauchbarkeit der Messung für die erfindungsgemäßen Zwecke spürbar herabsetzt oder sogar vereitelt, je nachdem wo und wie die indirekte Messung erfolgt. Gänzlich unbrauchbar für die erfindungsgemäßen Zecke wäre eine solche indirekte Messung in der Regel etwa dann, wenn man sie an einem Wärmeleitelement mit hoher Wärmekapazität bzw. Wärmespeicherfähigkeit ausführt, wie etwa einem mit einem zeolithischen Material bestückten Wärmeleitelement oder einem primär zum Zwecke der Wärmespeicherung aus massivem Metall bestehenden, im Wesentlichen nicht aktiv gekühlten Wärmeleitelement.

*Dabei* ist vorgesehen, dass das Wärmeleitelement einen Durchbruch aufweist, der dem Temperaturfühler insbesondere unmittelbaren Zugang zu einem randfernen Abschnitt der zu kühlenden Oberfläche der Hülsenpartie des Werkzeughalters verschafft, so dass an dieser Stelle die Oberflächentemperatur der Hülsenpartie unmittelbar abgegriffen werden kann.

Unter einem randfernen Abschnitt der zu kühlenden Oberfläche der Hülsenpartie wird ein Abschnitt der Hülsenpartie verstanden, der im Wesentlichen in der Mitte bzw. im Bereich um die Mitte des Wärmeleitelements herum (jeweils in Richtung der Betriebsdrehachse des Werkzeughalters gesehen) liegt. Also ein Abschnitt, der soweit von der ringförmigen Stirnfläche und dem sich an die aufgedehnte Hülsenpartie anschließenden, massiveren Abschnitt des Werkzeughalters entfernt liegt, dass sich im Hinblick auf die Temperaturmessung keine wesentlichen Randeffekte bemerkbar machen.

Weitere Vorteile, Wirkungen und Ausgestaltungsmöglichkeiten der Erfindung ergeben sich aus der der nachfolgenden Beschreibung dreier bevorzugter Ausführungsbeispiele, die unter Bezugnahme auf die nachfolgend aufgelisteten Figuren erläutert werden. Es zeigen:
Figur 1: Einen der Werkzeughalter zu deren Kühlung das erfindungsgemäße Gerät bestimmt ist, wobei der Werkzeughalter hier in einer Position gezeigt wird, in der er von der ihm zugeordneten Schrumpfvorrichtung mittels einer Induktionsspule erhitzt wird;
Figur 2: eine perspektivische Ansicht eines ersten Ausführungsbeispiels der Erfindung schräg von vorne bzw. oben;
Figur 3: einen Achsschnitt durch das erste Ausführungsbeispiel der Erfindung;
Figur 4: die beim ersten Ausführungsbeispiel anzutreffende Interaktion zwischen dem Messeinsatz und der zu kühlenden Außenfläche der Werkzeugaufnahme;
Figur 5: ein zweites Ausführungsbeispiel der Erfindung, bei der die Temperatur der zu kühlenden Oberfläche der Werkzeugaufnahme berührungslos gemessen wird;
Figur 6: ein drittes Ausführungsbeispiel der Erfindung, im Rahmen dessen die Temperatur der zu kühlenden Oberfläche des Werkzeughalters aus der Kühlmitteltemperaturdifferenz rückgeschlossen wird.

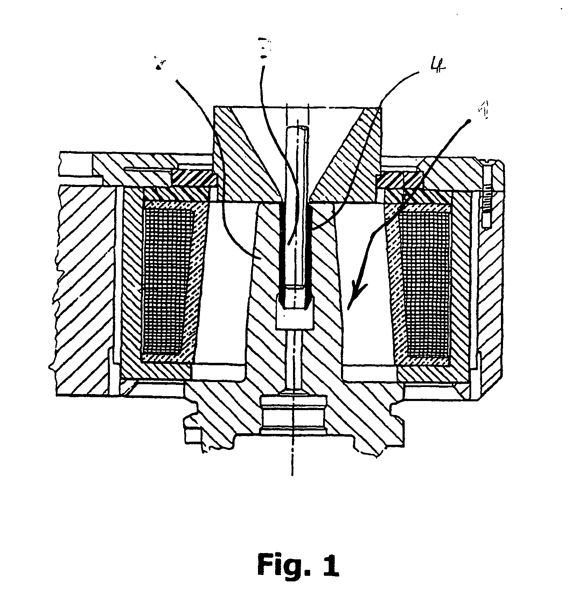

Die Figur 1 zeigt eine Schnittansicht eines Werkzeughalters 1, der sich in einer Induktionsspule befindet. Die Hülsenpartie 2 des Werkzeughalters 1 wird durch das hochfrequente Wechselfeld der Induktionsspule induktiv erhitzt. Hierdurch löst sich der Pressverbund zwischen dem Werkzeugschaft 3 und der Hülsenpartie 2 des Werkzeughalters.

Im von Figur 1 gezeigten Fall ist zwischen der Hülsenpartie 2 und dem Werkzeugschaft 3 noch eine schwarz dargestellte Hülse eingesetzt, die am Pressverbund teilnimmt und spezielle Wirkungen erreichen soll, die hier nicht näher interessieren. Im Regelfall wird diese Hülse zugunsten eines unmittelbaren Pressverbundes zwischen dem Werkzeugschaft 3 und der Hülsenpartie 2 entfallen.

Die Einzelheiten zur Gestaltung und zur Funktion eines solchen induktiven Schrumpfgeräts und des damit herzustellenden bzw. aufzuhebenden Pressverbundes sind, wie gesagt, im Patent EP 1 353 768 B1 offenbart, auf das zu Erläuterung des Ausführungsbeispiels in seiner Gesamtheit verwiesen wird.

Nach dem Erhitzen wird die Hülsenpartie 2 eine Temperatur von etwa 200 °C bis 500 °C haben. Um ein rationelles Ein- und Ausschrumpfen gewährleisten zu können, ist es wichtig, die Hülsenpartie möglichst schnell wieder auf eine Temperatur herunterzukühlen, bei der sie gefahrlos angefasst werden kann.

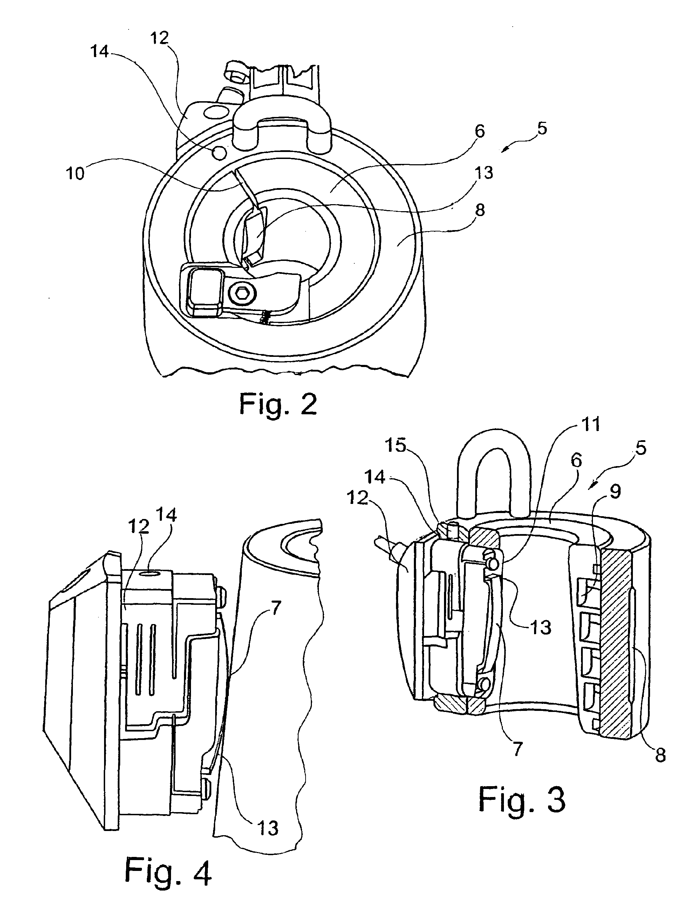

Um diese schnellstmögliche Abkühlung zu erreichen wird beispielsweise die in Figur 1 gezeigte Induktionsspule nach oben abgehoben. Auf die nun frei zugänglich gewordene Hülsenpartie 2 des Werkzeughalters 1 wird dann das in Figur 2 gezeigte Kühlgerät 5 aufgesetzt.

Das Kühlgerät 5 umfasst ein Wärmeleitelement 6. Das Wärmeleitelement 6 ist vorzugsweise aus einem gut Wärme leitenden Metall gefertigt. Das Wärmeleitelement weist im Bereich seiner inneren Mantelfläche eine konische Kontur auf, die an die entsprechende konische Außenkontur der zu kühlenden Hülsenpartie 2 angepasst ist, vgl. Fig. 3. Man kann also sagen, dass das Wärmeleitelement nach Art einer in Umfangsrichtung nahezu geschlossenen Manschette ausgestaltet ist, die sich der zu kühlenden Hülsenpartie 2 überstülpen lässt.

Auf diese Art und Weise lässt sich das Wärmeleitelement 6 des Kühlgeräts 5 in einen innigen, gut Wärme leitenden Kontakt mit der zu kühlenden Oberfläche der Hülsenpartie 2 bringen. Insbesondere, wenn das Kühlgerät 5 von oben, entlang einer gedachten Vertikalachse auf die zu kühlenden Hülsenpartie aufgesetzt wird, bleibt dieser innige Kontakt auch dann erhalten, wenn die Hülsenpartie im Laufe ihrer Abkühlung schrumpft - denn das Kühlgerät 5 "rutscht" dann unter dem Einfluss seines Eigengewichts ggf. ein kleines Stücken weiter auf die Hülsenpartie, nämlich um den Betrag, um den diese schrumpft. Auf Grund der guten Wärmeleitung und des geringen Wärmeübergangswiderstandes im Bereich der Kontaktfuge geht die von der Hülsenpartie 2 gespeicherte Wärme schnell auf das Wärmeleitelement 6 über.

Auf seiner der Hülsenpartie 2 abgewandten Seite ist das Wärmeleitelement 6 mit Kühlkanälen versehen, durch die ein kühlendes Fluid geleitet wird. Im Regelfall wird es sich bei diesem kühlenden Fluid um Wasser handeln, es können jedoch auch andere geeignete Fluide verwendet werden, etwa Pressluft.

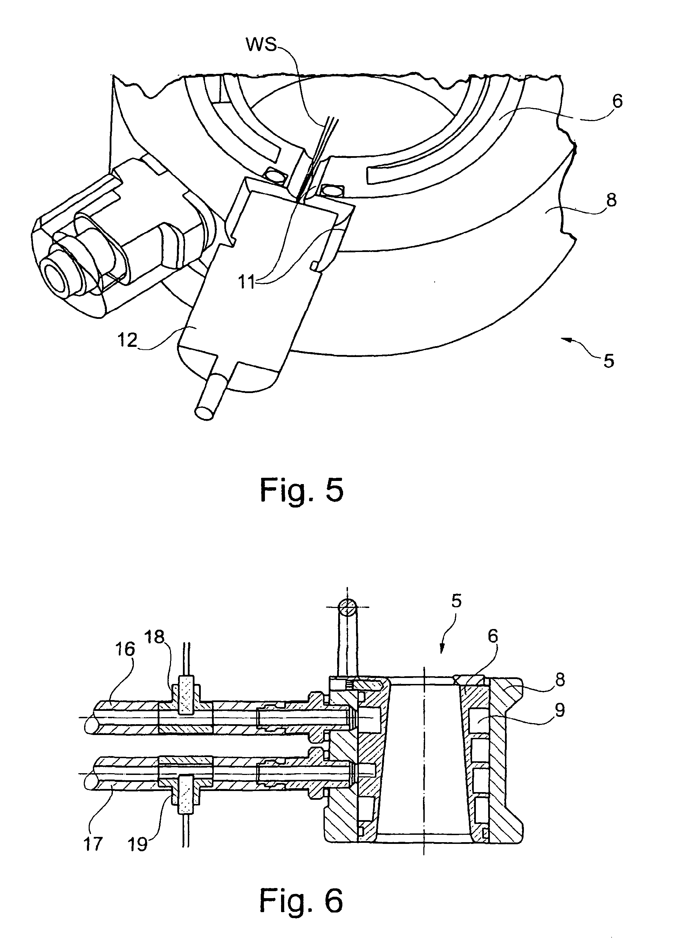

Das Wärmeleitelement 6 steckt im Normalfall in einem Mantelelement 8, das ein weiterer Bestandteil des Kühlgeräts 5 ist. Das Mantelelement 8 schließt also die Kühlkanäle 9 nach außen ab und sorgt so dafür, dass die Kühlmittelzufuhr und -abfuhr zu den Kühlkanälen nur über die hierfür vorgesehenen Kühlmittelanschlüsse erfolgen kann, die vom Grundprinzip her in Fig. 6 dargestellt sind, beim ersten (und zweiten) Ausführungsbeispiel aber nicht mit Temperaturfühlern bestückt sind. Der Kühlmittelstrom wird sich in manchen Fällen vom Bediener oder Steuerelektronik beeinflussen lassen.

Das Wärmeleitelement 6 ist im Regelfall entlang seines Umfangs an zumindest einer Stelle mit einem Längsschlitz versehen. Ein solcher Längsschlitz hat sich als zweckmäßig erwiesen, weil er das Wärmeleitelement 6 in hinreichendem Maß federnd nachgiebig macht, so dass sich das Wärmeleitelement nicht auf der sich abkühlenden Hülsenpartie 2 verklemmen/verkanten kann bzw. toleranter gegenüber unterschiedlichen Durchmessern der verschiedenen Hülsenpartien ist. In der Umgebung dieses Längsschlitzes ist das Wärmeleitelement 6 nicht mit Kühlkanälen versehen sondern besteht stattdessen hier aus Vollmaterial.

Erfindungsgemäß wird ein Durchbruch 11 vorgesehen, vorzugsweise im Bereich des besagten Schlitzes 10 des Wärmeleitelements 6. Da das Wärmeleitelement hier, wie gesagt, aus Vollmaterial besteht, schneidet der Durchbruch nicht die Kühlkanäle an, führt also nicht zu Dichtungsproblemen. Der Durchbruch erstreckt sich in radialer Richtung meist nicht nur komplett durch das Wärmeleitelement 6 hindurch, sondern geht oft auch durch den Außenmantel 8 des Kühlgeräts 5. Aufgrund dieses Durchbruchs besteht, wenn man sich das Kühlgerät 5 in diesem Stadium in seiner auf die Hülsenpartie aufgesetzten Position vorstellt, zunächst ein von außen her völlig ungehinderter Zugang, der durch das gesamte Kühlgerät hindurch bis hin zu der Oberfläche der Hülsenpartie 2 reicht, die unter dem Durchbruch 11 zu liegen gekommen ist.

Der Durchbruch 11 ist so gestaltet, dass in ihn, im Regelfall von außen her, ein Messeinsatz 12 eingeschoben werden kann.

Die Erfindung kann ggf. auch so ausgeführt werden, dass sich der Durchbruch 11 nicht durch den Außenmantel 8 hindurch erstreckt. In diesem Fall kommt ein hinreichend weit miniaturisierter Messeinsatz 12 zum Einsatz, der in dem schmalen Bereich zwischen dem Durchbruch 11 und dem diesen überdeckenden Außenmantel 8 untergebracht wird, also vollständig innerhalb des Kühlgeräts 5 liegt.

Der Vollständigkeit halber ist noch zu erwähnen, dass es im Einzelfall, z. B. im Falle einer Nachrüstung, sein kann, dass der Durchbruch 11 so am Wärmeleitelement 8 angeordnet ist, dass er doch die Kühlkanäle anschneidet. Zweckmäßigerweise ist das Gehäuse des Messeinsatzes 12 dann derart gestaltet, dass der Messeinsatz 12 so in den Durchbruch eingesetzt und dort so verankert werden kann, dass er das Kühlmittel am Austritt aus dem Durchbruch hindert, d. h. den Durchbruch verschließt. Man spart sich dann zusätzliche Abdichtmaßnahmen.

Vorzugsweise an der schmalen Stirnseite ragt eine Feder aus dem Gehäuse des Messeinsatzes 12 nach außen. Diese besteht aus einem thermisch gut leitenden Blech, welches so dünn ist, dass es im Kontakt mit der Hülsenpartie sehr schnell nahezu vollständig deren momentane Temperatur annimmt. Das Blech könnte die aufgenommene Wärme nach innen in das Innere des Messeinsatzes 12 leiten, zum dort untergebrachten Temperaturfühler. Klar bevorzugt besteht die Feder jedoch aus einer Blechkombination (i. d. R. geschichtetes Paket aus zwei unterschiedlichen Blechen, wie etwa NiCr-Ni), die selbst ein Thermoelement bildet. Auf diese Art und Weise ist bereits der Kontaktabschnitt 7 der Feder per se der Temperaturfühler. Das führt dann zu dem entscheidenden Vorteil, dass der Temperaturfühler selbst in unmittelbaren Kontakt mit der Oberfläche der Hülsenpartie kommt, deren Temperatur gemessen werden soll.

Eine solche unmittelbare Messung gewährleistet eine höhere Messgenauigkeit bzw. ein schnelleres Ansprechverhalten. Die höhere Messgenauigkeit ist schon deshalb wichtig, weil man es hier i. d. R. mit instationären Wärmeleitvorgängen zu tun hat - der Abkühlvorgang darf erst dann beendet werden, wenn die Temperatur an der Oberfläche der zu kühlenden Hülsenpartie zuverlässig so weit gefallen ist, dass sie auch nach Beendigung des Kühlvorgangs nicht etwa durch die aus dem Inneren der Hülsenpartie an die Oberfläche geleitete Wäre wieder auf einen überkritischen Wert ansteigt. Das schnellere Ansprechverhalten ist gerade bei anspruchsvollen, vollautomatischen Schrumpfmaschinen mit integrierter Kühlung von erheblicher Bedeutung, da die Taktzeiten merklich verkürzt werden können, wenn der nächste Takt sofort in dem Augenblick gestartet werden kann, in dem die abzukühlende Hülsenpartie erstmals wieder zuverlässig eine unkritische Temperatur erreicht hat.

Der Messeinsatz 12 ist gerade so tief in den Durchbruch 11 des Kühlgeräts 5 eingesetzt, dass die Kontaktfeder 13 innig mit der zu kühlenden Fläche der Hülsenpartie 2 in Kontakt kommt, wenn das Kühlgerät 5 bestimmungsgemäß auf die Hülsenpartie 2 aufgesetzt wird - so, wie von Fig. 4 illustriert.

Die Kontaktfeder 13 ist dabei so ausgeführt, dass sie beim Aufsetzen des Kühlgeräts 5 auf die Hülsenpartie 2 hinreichend weit gespannt wird, so, dass der innige Kontakt auch dann erhalten bleibt, wenn die Hülsenpartie im Laufe ihres Abkühlens schrumpft. Wichtig ist dabei auch, dass die Kontaktfeder möglichst stets mit dem gleichen Anpressdruck an der Hülsenpartie anliegt, gleich, ob das Kühlgerät mehr oder weniger fest auf die zu kühlende Hülsenpartie aufgesetzt wird. Um dies zu gewährleisten ist die Kontaktfeder idealerweise als an beiden Enden eingespannte Blattfeder ausgeführt. So wird sie genau in Position gehalten und liegt stets mit nahezu dem gleichen Anpressdruck an. Mithin ist der an der Anlagestelle anzutreffende Wärmeübergangswiderstand stets im Wesentlichen konstant.

Im Regelfall befindet sich im Inneren des Messeinsatzes 12 die zur Auswertung des vom Temperaturfühler gelieferten Signals erforderliche Mikroelektronik.

Zusätzlich befindet sich - meist an der einen Schmalseite des Messeinsatzes 12 - eine in den Messeinsatz integrierte Leuchtdiode 14. Statt einer Leuchtdiode kann auch ein vergleichbarer Signalgeber (z. B. eine Miniglühlampe, ein Zeiger, ein akustischer Signalgeber oder dergl.) verwendet werden, was nachfolgend nicht jeweils nochmals betont wird. Im Übrigen kann anstelle eines Signalgebers z. B. auch ein Verriegelungsmechanismus betätigt werden, der mit dem Aufsetzen des Kühlgeräts auf den Werkzeughalter einrastet, das Kühlgerät an dem Werkzeughalter verriegelt und erst dann wieder freigibt, wenn der Abkühlvorgang beendet ist.

Die Leuchtdiode 14 wird von der in den Messeinsatz eingebauten Elektronik gesteuert, d. h. alle für die Temperaturmessung und -auswertung erforderlichen Organe sind in den Messeinsatz integriert, im Regelfall einschließlich der Aktoren, wie z. B. der Leuchtdiode.

Sobald die Elektronik (wieder) eine Temperatur detektiert, die unterhalb der kritischen Temperatur liegt, ab der das Berühren der Hülsenpartie gefährlich ist, lässt sie die Leuchtdiode das Signal "Abkühlphase beendet" ausgeben. Vorzugsweise kommt eine RG-Leuchtdiode zum Einsatz, die rot leuchtet, solange der Kühlvorgang fortgesetzt werden muss und grün, sobald der Kühlvorgang abgeschlossen ist. Eine solche "Ampelschaltung" ist intuitiv verständlich und minimiert daher die Gefahr eines Bedienungsfehlers.

Theoretisch genügt es, dass die signalgebende Leuchtdiode über eine Öffnung abstrahlt, die irgendwo in einem freiliegenden Gehäuseabschnitt des Messeinsatzes angeordnet ist. Um die Erkennbarkeit der Leuchtdiode zu verbessern, ist es in dem hier beschriebenen Ausführungsbeispiel allerdings so, dass in das Kühlgerät 5 eine Art Lichtschacht 15 eingearbeitet ist, über den die in den Messeinsatz 12 integrierte Leuchtdiode 14 nach oben unmittelbar in Richtung des Bedieners abstrahlen kann. Um das Eindringen von Verschmutzungen zu vermeiden, kann der Lichtschacht durch einen geeigneten transparenten Einsatz verschlossen sein. Wie man anhand von Fig. 3 sieht, ist der Lichtschacht so positioniert, dass die Öffnung, über die die Leuchtdiode aus dem Messeinsatz 12 nach außen abstrahlt, genau unter der Eingangsöffnung des Lichtschachts 15 zu liegen kommt, wenn der Messeinsatz 12 bestimmungsgemäß in das Kühlgerät 5 eingesetzt und dort befestigt ist.

Der Messeinsatz 12 wird in dem figürlich dargestellten ersten Ausführungsbeispiel über ein von der Kühlflüssigkeitsversorgung getrenntes, durch eine Steckverbindung angeschlossenes Speisekabel von außen gespeist. Gegebenenfalls kann über dieses Kabel auch das von dem Messeinsatz erzeugte Messsignal zur weiteren Verarbeitung nach außen abgeführt werden - etwa um eine großflächige externe Anzeige zu betreiben.

Vorzugsweise wird das Speisekabel in eine der Kühlmittelleitungen integriert bzw. zumindest an diese angebaut. Auf diese Art und Weise wird die Anzahl der separaten Leitungen von und zu dem Kühlgerät 5 klein gehalten, was der Handlichkeit dient.

In bestimmten Fällen kann auf das Speisekabel verzichtet werden, um so ein noch komfortabler zu handhabendes Kühlgerät zu schaffen. In diesen Fällen wird dann in den Messeinsatz 12 eine autonome Spannungsquelle integriert, regelmäßig in Form einer Knopfzelle, z. B. einer Li-Ion-Zelle, so dass der Messeinsatz 12 ohne jede Zu- oder Ableitung von und nach außen betrieben werden kann. Eine etwaige Datenübertragung nach außen erfolgt dann, soweit gewünscht, z. B. über die bekannte Bluetooth^{®}- Technologie bzw. eine vergleichbare drahtlose Datenübertragungstechnologie.

Ein solches Weglassen des Speisekabels ist besonders dort attraktiv, wo mit speziellen Anschlüssen für die Kühlmittelzuleitung und -ableitung gearbeitet wird. Nämlich mit mehr oder minder "selbstverbindenden" Anschlüssen, also z. B. Steck-Anschlüssen, über die die Kühlmittelleitungen ohne weiteres Zutun selbsttätig an das Kühlgerät 5 angekoppelt werden, sobald dieses korrekt ausgerichtet auf den in einer definierten Position ausgerichteten Werkzeughalter aufgesetzt wird. Man erhält damit ein "kabelloses" Kühlgerät, das sich sehr komfortabel handhaben lässt. Zudem wird die Gefahr verringert, dass im Laufe der Zeit Störungen durch Ermüdungsbrüche in den Adern des im Betrieb permanent hin und her bewegten Speisekabels auftreten.

Aus dem vorgehend Geschilderten ergibt sich, dass der erfindungswesentliche Temperaturfühler ggf. auch gut zur Nachrüstung verwendet werden kann. In die nachzurüstenden Kühlgeräte 5 muss lediglich ein geeigneter Durchbruch 11 eingefräst bzw. eingebracht werden, in den dann der Messeinsatz 12 eingesteckt und befestigt wird.

Das Signal des Temperaturfühlers kann auch dazu verwendet werden, um weitere Signale oder Abläufe an der Schrumpfmaschine zu triggern oder zu beeinflussen. So ist etwa daran zu denken, die Schrumpfmaschine mit einer zentralen Warnanzeige (z. B. "rote Lampe") auszurüsten, die aktiviert wird, sobald mit der induktiven Erhitzung des Werkzeughalters begonnen wird. Diese Warnanzeige geht - getriggert durch das Signal des Temperaturfühlers oder ein in Abhängigkeit davon erzeugtes Signal - erst dann wieder aus, wenn der Temperaturfühler signalisiert, dass die Hülsenpartie wieder eine unbedenkliche Temperatur erreicht hat. Auf diese Art und Weise werden Unfälle vermieden, die dadurch entstehen, dass der Maschinenbediener überraschend von der Maschine abberufen wird, dabei einen bereits induktiv erhitzten Werkzeughalter in der Maschine zurücklässt und sich bei seiner Rückkehr an dem erhitzten Werkzeughalter verbrennt, weil er ihn in der irrigen Annahme unachtsam anfasst, der Werkzeughalter sei noch oder schon wieder kalt.

Ebenso ist es möglich, mit dem Signal des Temperaturfühlers im Rahmen einer automatisierten Schrumpfanlage den Abschluss des Kühlvorgangs anzuzeigen und die Startfreigabe für nachfolgende Arbeitsschritte zu geben.

Selbstverständlich kann die erfindungsgemäße Weiterentwicklung des Kühlgeräts nicht nur für reine Kühlgeräte zum Einsatz kommen, sondern auch für solche Vorrichtungen, bei denen die Kühlung und die für die induktive Erhitzung sorgende Spule zu einer einzigen Einheit integriert sind.

Die Fig. 5 zeigt ein zweites, alternatives Ausführungsbeispiel für ein erfindungsgemäßes Kühlgerät. Das zuvor für das erste Ausführungsbeispiel Gesagte trifft dabei auch für dieses zweite Ausführungsbeispiel durchweg zumindest sinngemäß zu, sofern nachfolgend nichts anderes beschrieben wird.

Bei dem von Fig. 5 gezeigten zweiten Ausführungsbeispiel wird die Temperatur an der Oberfläche der zu kühlenden Hülsenpartie berührungslos gemessen. Zu diesem Zweck ist auch hier wieder zumindest ein Durchbruch im Wärmeleitelement 6 vorgesehen.

Die berührungslose Messung hat gegenüber dem Antasten der zu messenden Hülsenpartie mit einem Thermoelement oder dergl. schon deshalb einen wesentlichen Vorteil, weil auf Grund der Berührungsfreiheit der Messung Messfehler weitgehend auszuschließen sind - anders als beim Antasten mittels eines Thermoelements ist z. B. nahezu ausgeschlossen, dass die Messung dadurch beeinflusst wird, ob das Kühlgerät mal mehr und mal weniger fest auf die zu kühlende Hülsenpartie aufgesetzt wird.

Es fällt auf, dass der Durchbruch 11 bei diesem zweiten Ausführungsbeispiel, verglichen mit dem ersten Ausführungsbeispiel, sehr viel kleiner gehalten werden kann, da der hier als berührungslos arbeitender Temperaturfühler verwendete Infrarotsensor wesentlicher kompakter baut. Das hat natürlich vor allen Dingen dann Vorteile, wenn ein solcher Temperaturfühler bei bestehenden Kühlgeräten nachgerüstet werden soll - oder wenn für einen bereits in Serie produzierten Kühlgerätetyp nachträglich die optionale Ausrüstung mit einer Temperaturerkennung angeboten werden soll, ohne für die Geräte, die mit dieser Option ausgerüstet werden, spezielle Wärmeleitelemente vorsehen zu müssen. Denn auch dann, wenn in dem Wärmeleitelement 6 nur ein schmaler von Kühlkanälen freier Bereich zur Verfügung steht, kann mittels des entsprechend schmalen Durchbruchs 11 ein unmittelbarer Zugang zur Oberfläche der Hülsenpartie geschaffen werden, ohne die Kühlkanäle zu stören - im Zweifelsfall reicht eine simple in radialer Richtung verlaufende Bohrung durch einen örtlich aus Vollmaterial bestehenden Steg des Wärmeleitelements.

Dass entlang der Trennfuge zwischen dem Wärmeleitelement 6 und dem Außenmantel 8 kein Kühlmittel bis in den Bereich des Durchbruchs 11 "kriechen" kann, lässt sich recht einfach sicherstellen - etwa durch eine Schnurdichtung, die den runden Durchbruch 11 kreisringförmig umgibt, so wie von Fig. 5 gezeigt.

Selbst wenn ein solch kleiner Durchbruch 11 im Einzelfall doch einmal einen Kühlkanal schneiden sollte, stört das nicht wesentlich. Denn ein derart kleiner Durchbruch 11 lässt sich relativ einfach abdichten. Im Zweifelsfall muss lediglich ein Röhrchen in den Durchbruch eingepresst (bzw. dichtend eingesetzt) werden, durch dessen Mitte hindurch die von der Oberfläche der Hülsenpartie ausgesandte Wärmestrahlung auf den Infrarotsensor fallen kann und dessen äußere Mantelfläche gegen die Kühlkanäle abdichtet.

Im vorliegenden Fall ist das Mantelelement 8 entweder mit einem Presssitz oder noch besser mit einem Gewinde versehen, so dass der Infrarotsensor positionsgenau in dem Mantelelement 8 festgesetzt werden kann.

Der Infrarotsensor kann, ähnlich wie der oben beschriebene Messeinsatz, autonom bzw. kabellos ausgeführt sein, dass heißt mit einer eigenen Spannungsversorgung in Form einer Knopfzelle oder ähnlichem. In diesem Fall trägt natürlich der Infrarotsensor dann auch gleich die Auswerteelektronik und die Anzeigevorrichtung, etwa in Form der oben beschriebenen Leuchtdiode.

An Stelle eines einfachen Infrarotsensors kann auch eine zweikanalige Ausführung verwendet werden, ein sogenanntes Quotientenpyrometer. Ouotientenpyrometer haben gegenüber einfachen Infrarotsensoren den Vorteil, dass sie auch bei veränderlichen Oberflächen noch genaue Messergebnisse erzielen, etwa wenn die aktuell zu messende Hülsenpartie verschmutzt ist oder sich in Folge häufiger Erwärmung verfärbt hat

Ein drittes, wiederum alternatives Ausführungsbeispiel zeigt die Fig. 6.

Das zuvor für das erste Ausführungsbeispiel Gesagte (etwa die Ausführungen zur Signalerzeugung, zur Kabelführung oder zur Frage der Kabellosigkeit) trifft dabei auch für dieses dritte Ausführungsbeispiel zumindest sinngemäß zu, sofern nachfolgend nichts anderes beschrieben wird bzw. sofern sich nicht aus der unterschiedlichen technischen Konzeption etwas anderes ergibt.

Im Rahmen dieses Ausführungsbeispiels wird die Erfindung dadurch umgesetzt, dass ein Kühlgerät bekannter Bauart zumindest im Bereich seines Rücklaufs (17) für das Kühlmittel mit einem Temperaturfühler (19) ausgerüstet wird - wobei es allerdings besser ist, wenn der Vorlauf (16) für das Kühlmittel ebenfalls mit einem Temperaturfühler (18) bestückt ist, nämlich so, wie das auch von Fig. 6 gezeigt wird.

Soweit nur im Rücklauf (17) ein Temperaturfühler (19) angeordnet ist, sind "kalibrierende" Reihenversuche nötig, über die Erfahrungswerte gewonnen werden, welche momentane Temperatur das rückströmende Kühlmittel unmittelbar zu dem Zeitpunkt aufweist, zu dem die Hülsenpartie erstmals wieder eine unkritische Temperatur erreicht hat.

Sofern in beiden Kühlmittelleitungen (15, 16) Temperaturfühler (18, 19) angeordnet sind, wird eine Differenzmessung ausgeführt - aus der Differenz der Temperatur des zugeführten Kühlmittels und der Temperatur des wieder abgeführten Kühlmittels wird rückgerechnet, ab wann die Oberfläche der Hülsenpartie eine Temperatur erreicht haben muss, die eine gefahrlose Handhabung des Werkzeughalters erlaubt.

Sofern der Temperaturunterschied dauerhaft einen bestimmten Wert unterschreitet, kann das Kühlgerät bzw. die Werkzeugaufnahme freigegeben werden. Das kann beispielsweise wiederum durch die im Mantel vorhandene Leuchtdiode optisch angezeigt werden, vorzugsweise auch hier durch Ampelschaltung.

Bei diesem dritten Ausführungsbeispiel wird lediglich eine indirekte Messung ausgeführt, aus der dann auf die momentane Oberflächentemperatur der Hülsenpartie zurückgeschlossen wird. Eine solche Messung ist naturgemäß weniger genau und mit einer erheblich größeren "Trägheit" behaftet, als eine unmittelbare Messung, d. h. eine Messung bei der die Oberfläche, deren Temperatur zu bestimmen ist, unmittelbar angetastet wird. Wichtig ist es, dass bei diesem Konzept die Wärmekapazität des Wärmeleitelements und auch der Kühlmittelstrom (insbes. Durchflussmenge, Durchflussgeschwindigkeit, Vorlauftemperatur) so gewählt werden, dass sich überhaupt sinnvolle Messwerte ergeben. Welche Wahl hier zu treffen ist hängt von den Umständen des Einzelfalls ab und ist durch Versuche zu ermitteln.

Der erhebliche Vorteil dieses dritten Ausführungsbeispiels ist indes der, dass sich die hier verwendete Messmethode auf einfachste Art und Weise nachrüsten lässt, da keinerlei Veränderungen am Kühlgerät als solchem erforderlich sind.

### Bezugszeichenliste:

- 1: Werkzeughalter
- 2: Hülsenpartie
- 3: Werkzeugschaft
- 4: Zwischenhülse
- 5: Kühlgerät
- 6: Wärmeleitelement
- 7: Kontaktabschnitt der Kontaktfeder (Teilabschnitt von 13)
- 8: Mantelelement
- 9: Kühlkanäle
- 10: Längsschlitz
- 11: Durchbruch
- 12: Messeinsatz
- 13: Kontaktfeder
- 14: Leuchtdiode
- 15: Lichtschacht
- 16: Kühlmittelzuleitung (Zulauf)
- 17: Kühlmittelableitung (Rücklauf)
- 18: Erster Temperaturfühler
- 19: Zweiter Temperaturfühler

- WS: Wärmestrahlung (nur ganz grob angedeutet)

## Patentansprüche

1. Kühlgerät (5) zum Kühlen von Werkzeughaltern mit Schrumpffuttern, mit einem Wärmeleitelement (6), das bestimmungsgemäß so an die zu kühlende Hülsenpartie (2) des jeweiligen Werkzeughalters anzulegen ist, dass zumindest ein wesentlicher Teil der Wärme des Werkzeughalters-durch Wärmeleitung in das Wärmeleitelement (6) abfließt, wobei das Kühlgerät (5) mindestens einen Temperaturfühler (13; 18; 19) umfasst, der bei regulärem Betrieb des Kühlgeräts (5) ein von der momentanen Temperatur der zu kühlenden Hülsenpartie (2) abhängiges Signal liefert, welches auf die Betriebsdauer des Kühlgeräts (5) am Werkzeughalter Einfluss nimmt und/oder auf den Betrieb einer Schrumpfvorrichtung insgesamt, **dadurch gekennzeichnet, dass** das Wärmeleitelement einen Durchbruch (11) aufweist, der dem Temperaturfühler unmittelbaren Zugang zu einem - vorzugsweise randfernen - Abschnitt der zu kühlenden Oberfläche der Hülsenpartie des Werkzeughalters verschafft, so dass an dieser Stelle die-Oberflächentemperatur der Hülsenpartie unmittelbar abgegriffen werden kann, wobei sich der Durchbruch in radialer Richtung komplett durch das Wärmeleitelement (6) hindurch erstreckt.

2. Kühlgerät nach Anspruch 1, **dadurch gekennzeichnet, dass** der Temperaturfühler die Temperatur der interessierenden Fläche des Werkzeughalters berührungslos misst, wobei der Temperaturfühler vorzugsweise ein Infrarotsensor ist.

3. Kühlgerät nach Anspruch 1, **dadurch gekennzeichnet, dass** der Temperaturfühler aus zwei Streifen unterschiedlicher thermoaktiver Metalle besteht, die an der Stelle, mit der der Temperaturfühler bestimmungsgemäß gegen die zu messende Fläche des Werkzeughalters anliegt, innig verbunden sind und dadurch genau an dieser Stelle ein Thermoelement bilden.

4. Kühlgerät nach Anspruch 3, **dadurch gekennzeichnet dass** das Thermoelement die Gestalt einer Feder, vorzugsweise einer Blattfeder aufweist, die federnd vorgespannt gegen die zu messende Oberfläche der Hülsenpartie anliegt, wenn das Kühlgerät bestimmungsgemäß auf dem Werkzeughalter sitzt.

5. Kühlgerät (5) zum Kühlen von Werkzeughaltern mit Schrumpffuttern, mit einem Wärmeleitelement (6), das bestimmungsgemäß so an die zu kühlende Hülsenpartie (2) des jeweiligen Werkzeughalters anzulegen ist, dass zumindest ein wesentlicher Teil der Wärme des Werkzeughalters durch Wärmeleitung in das Wärmeleitelement (6) abfließt, wobei das Kühlgerät (5) mindestens einen Temperaturfühler (13; 18; 19) umfasst, der bei regulärem Betrieb des Kühlgeräts (5) ein von der momentanen Temperatur der zu kühlenden Hülsenpartie (2) abhängiges Signal liefert, welches auf die Betriebsdauer des Kühlgeräts (5) am Werkzeughalter Einfluss nimmt und/oder auf den Betrieb einer Schrumpfvorrichtung insgesamt, **dadurch gekennzeichnet, dass** der Temperaturfühler als Messeinsatz (12) ausgeführt ist, mit einer nach außen ragenden Kontaktfeder (13), deren Blech die die aufgenommene Wärme nach innen, in das Innere des Messeinsatzes (12) leitet, zum dort untergebrachten Temperaturfühler oder die aus einer Blechkombination besteht, die selbst ein Thermoelement bildet und auf diese Art und Weise per se den Temperaturfühler bildet, wobei der Messeinsatz gerade so tief in einen Durchbruch (11) des Kühlgeräts (5) eingesetzt ist, dass die Kontaktfeder (13) innig mit der zu kühlenden Fläche der Hülsenpartie (2) in Kontakt kommt, wenn das Kühlgerät bestimmungsgemäß auf die Hülsenpartie aufgesetzt wird, wobei die Kontaktfeder so ausgeführt ist, dass sie beim Aufsetzen des Kühlgeräts (5) auf die Hülsenpartie (2) hinreichend weit gespannt wird, so dass der innige Kontakt auch dann erhalten bleibt, wenn die Hülsenpartie im Laufe ihres Abkühlens schrumpft und wobei sich der Durchbruch in radialer Richtung komplett durch das Wärmeleitelement (6) hindurch erstreckt.

6. Kühlgerät nach Anspruch 5, **dadurch gekennzeichnet, dass** der Temperaturfühler (13) die Temperatur der interessierenden Fläche des Werkzeughalters unmittelbar misst.

7. Kühlgerät nach einem der Ansprüche 1, 2, 3, 4, **dadurch gekennzeichnet, dass** der Durchbruch auf einer Dehnfuge liegt, die das Wärmeleitelement schlitzt, um ihm eine federnde Wirkung zu verleihen.

8. Kühlgerät nach einem der Ansprüche 1, 2, 3, 4, 7, **dadurch gekennzeichnet, dass** sich der Durchbruch bis durch den Außenmantel des Kühlgeräts hindurch fortsetzt, so dass der bzw. ein Messeinsatz mit Temperaturfühler von außen her an das Kühlgerät angesetzt werden kann.

9. Kühlgerät nach einem der vorhergehenden Ansprüche, **dadurch gekennzeichnet, dass** das Kühlgerät einen Messeinsatz aufweist, der aus einem Gehäuse besteht, das den Temperaturfühler trägt und zumindest einen Teil einer Auswerteelektronik beherbergt, sowie vorzugsweise einen Signalgeber (meist in Form einer Leuchtdiode oder eines akustischen Signalgebers), der anzeigt, wann der Kühlvorgang soweit abgeschlossen ist, dass das Kühlgerät gefahrlos vom zu kühlenden Werkzeug abgenommen werden kann.

10. Kühlgerät nach einem der vorhergehenden Ansprüche, **dadurch gekennzeichnet, dass** das Kühlgerät einen Messeinsatz aufweist, der eine autonome Energieversorgung insbesondere in Form einer Batterie oder eines Akkus aufweist und damit zumindest zeitweilig unabhängig von einem Versorgungskabel betrieben werden kann.

11. Kühlgerät nach einem der vorhergehenden Ansprüche, **dadurch gekennzeichnet, dass** das Kühlgerät einen Messeinsatz aufweist, der mit einem Sender ausgestattet ist, mittels dessen er seine Messdaten kabellos an einen dem Schrumpfgerät zugeordneten Messdatenempfänger überträgt.

12. Kühlgerät nach einem der vorhergehenden Ansprüche, **dadurch gekennzeichnet, dass** das Kühlgerät einen Messeinsatz aufweist, der mittels eines optischen Signals anzeigt, wann der Kühlvorgang soweit abgeschlossen ist, dass das Kühlgerät gefahrlos vom zu kühlenden Werkzeug abgenommen werden kann, wobei dieses optische Signal vom Messeinsatz in einen Lichtweg am Kühlgerät eingestrahlt wird, der das optische Signal zu einer vom Bediener des Kühlgeräts besser sichtbaren Stelle des Kühlgeräts führt und dort sichtbar macht.

13. Verwendung eines Infrarottemperaturfühlers zum Messen der örtlichen Oberflächentemperatur der Hülsenpartie eines Werkzeughalters durch einen Durchbruch, eine Bohrung, ein Fenster oder ein Röhrchen hindurch, **dadurch gekennzeichnet, daß** der Durchbruch, die Bohrung, das Fenster oder das Röhrchen ein Kühlgerät gemäß Anspruch 1 in etwa radialer Richtung durchdringt.

## Claims

1. Cooling device (5) for cooling tool holders with shrink chucks, comprising a heat-conducting element (6) which, as intended, is to be applied to the sleeve section (2) to be cooled of the respective tool holder in such a way that at least a substantial portion of the heat of the tool holder drains off into the heat-conducting element (6) by thermal conduction, the cooling device (5) comprising at least one temperature sensor (13; 18; 19) which, during the regular operation of the cooling device (5), supplies a signal that is dependent upon the current temperature of the sleeve section (2) to be cooled and that influences the operating period of the cooling device (5) on the tool holder and/or the operation of a shrink fixture as a whole, **characterised in that** the heat-conducting element comprises an opening (11) that gives the temperature sensor direct access to a section, which is preferably distant from the edge, of the surface to be cooled of the sleeve section of the tool holder, so that the surface temperature of the sleeve section can be directly picked off at this location, with the opening extending completely through the heat-conducting element (6) in the radial direction.

2. Cooling device according to claim 1, **characterised in that** the temperature sensor measures the temperature of the relevant surface of the tool holder without contact, with the temperature sensor preferably being an infrared sensor.

3. Cooling device according to claim 1, **characterised in that** the temperature sensor consists of two strips of different thermoactive metals, which, in the area with which the temperature sensor rests against the surface to be measured of the tool holder as intended, are intimately connected to each other and thus form a thermocouple exactly in this area.

4. Cooling device according to claim 3, **characterised in that** the thermocouple has the shape of a spring, preferably of a leaf spring, which rests resiliently biased against the surface to be measured of the sleeve section when the cooling device is placed on the tool holder as intended.

5. Cooling device (5) for cooling tool holders with shrink chucks, comprising a heat-conducting element (6) which, as intended, is to be applied to the sleeve section (2) to be cooled of the respective tool holder in such a way that at least a substantial portion of the heat of the tool holder drains off into the heat-conducting element (6) by thermal conduction, the cooling device (5) comprising at least one temperature sensor (13; 18; 19) which, during the regular operation of the cooling device (5), supplies a signal that is dependent upon the current temperature of the sleeve section (2) to be cooled and that influences the operating period of the cooling device (5) on the tool holder and/or the operation of a shrink fixture as a whole, **characterised in that** the temperature sensor is configured as a measuring insert (12), with an outwardly projecting contact spring (13), whose metal sheet conducts the absorbed heat inwards into the interior of the measuring insert (12) to the temperature sensor disposed there, or which consists of a sheet-metal combination that itself forms a thermocouple and in this manner forms the temperature sensor per se, the measuring insert being inserted into an opening (11) of the cooling device (5) just so deep that the contact spring (13) intimately comes into contact with the surface to be cooled of the sleeve portion (2) when the cooling device is being placed onto the sleeve section as intended, wherein the contact spring is configured in such a way that it is sufficiently biased, when the cooling device (5) is placed on the sleeve section (2), so that the intimate contact is maintained even when the sleeve section shrinks while it cools off, and wherein the opening extends completely through the heat-conducting element (6) in the radial direction.

6. Cooling device according to claim 5, **characterised in that** the temperature sensor (13) measures the temperature of the relevant surface of the tool holder directly.

7. Cooling device according to any one of the claims 1, 2, 3, 4, **characterised in that** the opening lies on an expansion joint that slits the heat-conducting element in order to give it a resilient property.

8. Cooling device according to any one of the claims 1, 2, 3, 4, 7, **characterised in that** the opening continues through the outer shell of the cooling device, so that the or a measuring insert with a temperature sensor can be applied to the cooling device from the outside.

9. Cooling device according to any one of the preceding claims, **characterised in that** the cooling device comprises a measuring insert consisting of a housing which carries the temperature sensor and accommodates at least a part of an electronic evaluation system, as well as preferably a signalling device (most frequently in the form of a light-emitting diode or an acoustic signalling device) which indicates when the cooling process has been concluded to an extent that the cooling device can be safely removed from the tool to be cooled.

10. Cooling device according to any one of the preceding claims, **characterised in that** the cooling device comprises a measuring insert which has an autonomous energy supply, in particular in the form of a battery or a rechargeable battery, and can thus be operated independently from a supply line at least temporarily.

11. Cooling device according to any one of the preceding claims, **characterised in that** the cooling device comprises a measuring insert which is equipped with a transmitter, by means of which it transmits its measurement data wirelessly to a measurement data receiver associated with the shrinking device.

12. Cooling device according to any one of the preceding claims, **characterised in that** the cooling device comprises a measuring insert, which indicates by means of a visual signal when the cooling process has been concluded to an extent that the cooling device can be safely removed from the tool to be cooled, wherein this visual signal is irradiated by the measuring insert into a light path on the cooling device that guides the visual signal to an area of the cooling device that is more easily visible to the user of the cooling device, and makes it visible there.

13. Use of an infrared temperature sensor for measuring the local surface temperature of the sleeve section of a tool holder through an opening, a bore hole, a window or a tube, **characterised in that** the opening, the bore hole, the window or the tube penetrates a cooling device according to claim 1 in approximately the radial direction.

## Revendications

1. Appareil de refroidissement (5) pour refroidir des porte-outils avec mandrins de frettage, comprenant un élément thermoconducteur (6) qui doit être appliqué, conformément à sa destination, contre la partie de manchon (2) à refroidir du porte outil respectif de telle façon qu'au moins une partie essentielle de la chaleur du porte-outil est évacuée par conduction thermique vers l'élément thermoconducteur (6), l'appareil de refroidissement (5) comprenant au moins un capteur de température (13 ; 18 ; 19) qui, lors d'un fonctionnement régulier de l'appareil de refroidissement (5), délivre un signal dépendant de la température momentanée de la partie de manchon (2) à refroidir, ce signal ayant une influence sur la durée de fonctionnement de l'appareil de refroidissement (5) au niveau du porte-outil et/ou globalement sur le fonctionnement d'un dispositif de frettage, **caractérisé en ce que** l'élément thermoconducteur comporte une traversée (11) qui assure au capteur de température un accès direct vers un tronçon, de préférence éloigné du bord, de la surface à refroidir de la partie de manchon du porte-outil, de sorte qu'à cet emplacement la température de surface de la partie de manchon peut être palpée directement, ladite traversée s'étendant en direction radiale complètement à travers l'élément thermoconducteur (6).

2. Appareil de refroidissement selon la revendication 1, **caractérisé en ce que** le capteur de température mesure la température de la surface intéressante du porte-outil sans contact, le capteur de température étant de préférence un capteur infrarouge.

3. Appareil de refroidissement selon la revendication 1, **caractérisé en ce que** le capteur de température est formé de deux rubans de métaux thermoactifs différents qui, à l'emplacement par lequel le capteur de température est appliqué, conformément à sa destination, contre la surface à mesurer du porte-outil, sont intimement reliés et forment grâce à cela un thermoélément à cet emplacement.

4. Appareil de refroidissement selon la revendication 3, **caractérisé en ce que** le thermoélément présente la configuration d'un ressort, de préférence d'un ressort à lame, qui est appliqué sous précontrainte élastique contre la surface à mesurer de la partie de manchon quand l'appareil de refroidissement repose, conformément à sa destination, sur le porte-outil.

5. Appareil de refroidissement (5) pour refroidir des porte-outils avec mandrins de frettage, comprenant un élément thermoconducteur (6) qui, conformément à sa destination, doit être appliqué contre la partie de manchon (2) à refroidir du porte-outil respectif de telle façon qu'au moins une partie essentielle de la chaleur du porte-outil est évacuée par conduction thermique vers l'élément thermoconducteur (6), l'appareil de refroidissement (5) comprenant au moins un capteur de température (13 ; 18 ; 19) qui, lors d'un fonctionnement régulier de l'appareil de refroidissement (5), délivre un signal dépendant de la température momentanée de la partie de manchon (2) à refroidir, ce signal ayant une influence sur la durée de fonctionnement de l'appareil de refroidissement (5) au niveau du porte-outil et/ou dans l'ensemble sur le fonctionnement d'un dispositif de frettage, **caractérisé en ce que** le capteur de température est réalisé sous forme d'insert de mesure (12), avec une patte de contact (13) dépassant vers l'extérieur, dont la tôle dérive la chaleur reçue vers l'intérieur, jusqu'à l'intérieur de l'insert de mesure (12) vers le capteur de température logé à cet endroit, ou qui est constitué par une combinaison de tôles formant elle-même un thermoélément et constitue de cette manière en soi le capteur de température, dans lequel l'insert de mesure est mis en place, dans une traversée (11) de l'appareil de refroidissement (5), exactement aussi profondément que la lame de contact (13) vient en contact intime avec la surface à refroidir de la partie de manchon (2) quand l'appareil de refroidissement est posé, conformément à sa destination, sur la partie de manchon, et la lame de contact est réalisée de telle façon que, lors de la pose de l'appareil de refroidissement (5) sur la partie de manchon (2), elle est bandée de façon suffisamment forte pour que le contact intime reste maintenu également quand la partie de manchon se rétracte au cours de son refroidissement, et dans lequel la traversée s'étend en direction radiale complètement à travers l'élément thermoconducteur (6).

6. Appareil de refroidissement selon la revendication 5, **caractérisé en ce que** le capteur de température (13) mesure directement la température de la surface intéressante du porte-outil.

7. Appareil de refroidissement selon l'une des revendications 1, 2, 3, 4, **caractérisé en ce que** la traversée est située sur un joint de dilatation qui scinde l'élément thermoconducteur afin de lui conférer un effet élastique.

8. Appareil de refroidissement selon l'une des revendications 1, 2, 3, 4, 7, **caractérisé en ce que** la traversée se poursuit jusqu'à travers l'enveloppe extérieure de l'appareil de refroidissement, de sorte que l'insert de mesure ou un insert de mesure avec capteur de température peut être rapporté contre l'appareil de refroidissement depuis l'extérieur.

9. Appareil de refroidissement selon l'une des revendications précédentes, **caractérisé en ce que** l'appareil de refroidissement comprend un insert de mesure qui est formé d'un boîtier, lequel porte le capteur de température et abrite au moins une partie d'une électronique d'évaluation, ainsi que de préférence un générateur de signal (généralement sous la forme d'une diode électroluminescente ou d'un générateur de signal acoustique) qui indique quand le processus de refroidissement est achevé dans une mesure telle que l'appareil de refroidissement peut être enlevé de l'outil à refroidir sans danger.

10. Appareil de refroidissement selon l'une des revendications précédentes, **caractérisé en ce que** l'appareil de refroidissement comprend un insert de mesure qui comprend une alimentation d'énergie autonome, en particulier sous la forme d'une pile ou d'un accumulateur, et peut ainsi fonctionner au moins temporairement indépendamment d'un câble d'alimentation.

11. Appareil de refroidissement selon l'une des revendications précédentes, **caractérisé en ce que** l'appareil de refroidissement comprend un insert de mesure qui est équipé d'un émetteur, au moyen duquel il transmet ses données de mesure sans fil vers un récepteur de données de mesure associé à l'appareil de frettage.

12. Appareil de refroidissement selon l'une des revendications précédentes, **caractérisé en ce que** l'appareil de refroidissement comprend un insert de mesure qui indique, au moyen d'un signal optique, quand le processus de refroidissement est achevé dans une mesure telle que l'appareil de refroidissement peut être enlevé de l'outil à refroidir sans danger, dans lequel ce signal optique est injecté depuis l'insert de mesure dans un guide de lumière sur l'appareil de refroidissement, qui mène le signal optique vers un emplacement de l'appareil de refroidissement mieux visible de l'opérateur de l'appareil de refroidissement, et le rend visible à cet emplacement.

13. Utilisation d'un capteur de température infrarouge pour mesurer la température de surface locale de la partie de manchon d'un porte-outils à travers une traversée, un perçage, une fenêtre ou un petit tube, **caractérisé en ce que** la traversée, le perçage, la fenêtre ou le petit tube traverse un appareil de refroidissement selon la revendication 1 en direction approximativement radiale.
